# EUROPEAN PATENT SPECIFICATION

(11) **EP 4 316 190 B1**
(45) Date of publication and mention of the grant of the patent: **10.07.2024**
(21) Application number: 22719046.9
(22) Date of filing: 30.03.2022
(51) Int. Cl.: H04W 76/34, H04W 76/40, H04W 4/06

(54) **METHODS, APPARATUS AND COMPUTER-READABLE MEDIA RELATING TO MULTICAST BROADCAST SERVICES IN A COMMUNICATION NETWORK**
VERFAHREN, VORRICHTUNG UND COMPUTERLESBARE MEDIEN IM ZUSAMMENHANG MIT MULTICAST-BROADCAST-DIENSTEN IN EINEM KOMMUNIKATIONSNETZ
PROCÉDÉS, APPAREIL ET SUPPORTS LISIBLES PAR ORDINATEUR RELATIFS À DES SERVICES DE DIFFUSION/MULTIDIFFUSION DANS UN RÉSEAU DE COMMUNICATION

(30) Priority: 30.03.2021 US 202163167902 P
(43) Date of publication of application: 07.02.2024
(73) Proprietor: Telefonaktiebolaget LM Ericsson (publ), 164 83 Stockholm (SE)
(72) Inventor: LING, Jie, Shanghai 200335 (CN); GAN, Juying, Shanghai 200335 (CN); SCHLIWA-BERTLING, Paul, 590 71 Ljungsbro (SE); VESELY, Alexander, 8330 Feldbach (AT)
(74) Representative: Ericsson
(86) International application number: PCT/SE2022/050312
(87) International publication number: WO 2022/211713

(56) References cited:
- WO-A1-2022/015046
- WO-A1-2022/075562
- KR-A- 20210 104 539
- US-A1- 2019 394 833
- US-A1- 2022 053 603
- ERICSSON: "Solution 2 EN clarifications", vol. SA WG2, no. Elbonia; 20201012 - 20201023, 25 October 2020 (2020-10-25), XP051948186, Retrieved from the Internet <URL:https://ftp.3gpp.org/tsg_sa/WG2_Arch/TSGS2_141e_Electronic/Docs/S2-2007934.zip S2-2007934was7282r01_23757_KI#1_Soln2_update.doc> [retrieved on 20201025]
- ERICSSON: "Solution 2 EN clarifications", vol. SA WG2, no. Elbonia; 20201012 - 20201023, 2 October 2020 (2020-10-02), XP051938326, Retrieved from the Internet <URL:https://ftp.3gpp.org/tsg_sa/WG2_Arch/TSGS2_141e_Electronic/Docs/S2-2007282.zip S2-2007282_Soln2_cleanup_v2.doc> [retrieved on 20201002]
- HUAWEI ET AL: "Micellaneous corrections", vol. SA WG2, no. e-meeting; 20211018 - 20211022, 25 October 2021 (2021-10-25), XP052062741, Retrieved from the Internet <URL:https://ftp.3gpp.org/tsg_sa/WG2_Arch/TSGS2_147E_Electronic_2021-10/Docs/S2-2107997.zip S2-2107997_(was7546)_MiscellaneousCorrection.docx> [retrieved on 20211025]

## Description

### TECHNICAL FIELD

Embodiments of the present disclosure relate to wireless communication, and particularly to methods, apparatus and computer-readable media related to multicast broadcast services in a communication network.

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

3GPP has earlier developed the MBMS (Multicast/Broadcast Multimedia Subsystem, see 3GPP TS 23.246 v16.1.0) for 3G networks for video multicast/broadcasting and streaming services and later introduced the eMBMS (evolved MBMS) for the Evolved Packet System (EPS). In Rel-13 and Rel-14, the MBMS system was updated to support new services such as Public Safety, cellular Internet of Things (CloT) and vehicle-to-X (V2X).

The scope of a new Release-17 study in 3GPP SA2 working group is to study both multicast requirements and use cases for CloT, Public Safety, V2X etc., and dedicated broadcasting requirements and use cases. The study targets the 5G Release 17 and the New Radio (NR) radio access. The study results so far have been documented in TR 23.757 v1.3.0 and the normative work has been documented in TS 23.247 v0.1.0. The 3GPP Draft; S2-2007934- 3rd Generation Partnership Project (3GPP), ERICSSON: "Solution 2 EN clarifications" from 2 October 2020 (2020-10-02), XP051938326, describes a procedure that takes place when the UE interest in an MB session has ceased.

In SA2#143E, two change requests were proposed to address signalling efficiency issues during MBS session activation and deactivation: S2-2100343 and S2-2101017. S2-2101017 proposed a solution without AMF involvement, whereas the solution involved in S2-2100343 included the AMF. The following paragraphs are copied from S2-2100343r01, in which a comparison is made between the solution without AMF involvement (i.e., as proposed in S2-2101017) and the solution with AMF involvement (as proposed in S2-2100343).

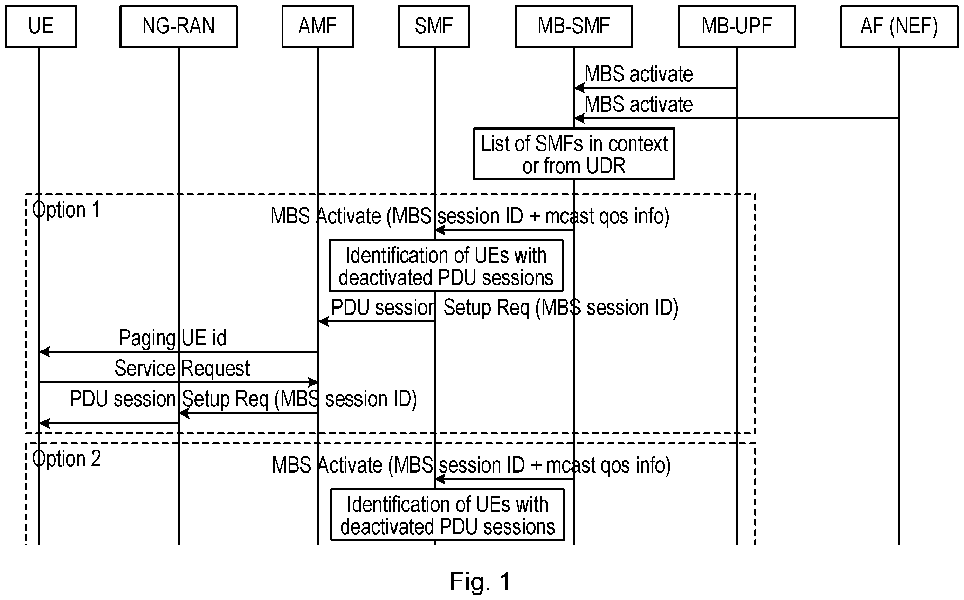

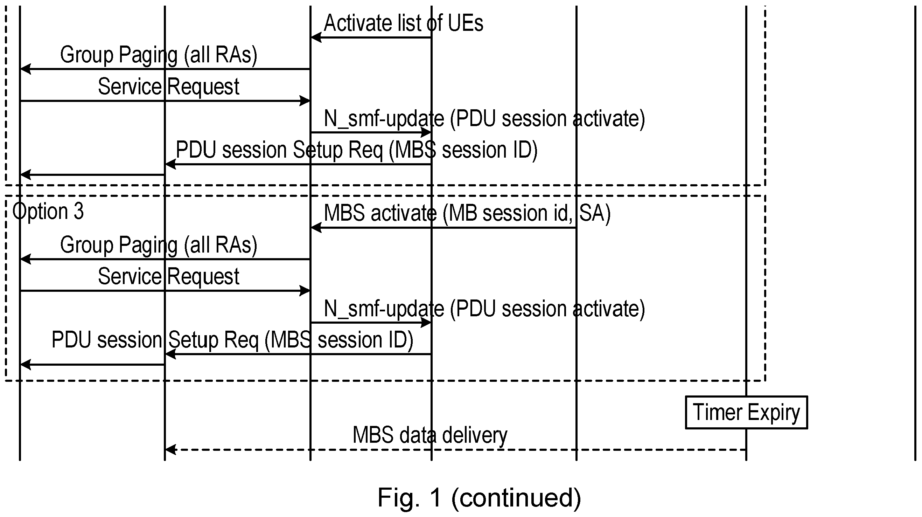

S2-2100343r01 recites the following comparison and proposal from S2-2101017 (the compared "options" are those illustrated in figure 1 for implementing MBS session (re)activation for the S2-2101017 solution (i.e., the SMF-centric approach)):

### Comparison of the options

*All options end up with per UE individual Service Request and per UE (individual) setting up (or re-activation) of the MBS-related PDU session. Therefore, no difference here.*

### The main difference is the load of paging attempts:

*In option 1 there is individual paging of each UE therefore high load on paging channel.*

*Variant 1a* [in which multicast QoS flows are maintained in PDU session at MBS session deactivation] *seems preferable compared to variant 1b [in which multicast QoS flows are removed in PDU session at MBS session deactivation] since the number of PDU session related requests is smaller.*

*In option 213 there is group paging* so *less load over the paging channel. The paging area is larger in option 3 than it could be since the full service area is paged regardless of where the UEs are located (i.e. regardless of the RA).*

*Option* 2 *sems the optimum compromise where group paging is used so less load over the paging channel, also this group paging takes place over a group paging area limited to the RAs of the UEs. However, whether the benefit of group paging can be taken ultimately depends on RAN2 support of group paging.*

*In summary option* 2 *generates less paging load than options 1 and 3. However, group paging needs confirmation by RAN.*

***Proposal 1:** Select option 2 if RAN introduces group paging and otherwise option 1 (individual paging).*

S2-2100343r01 also makes the following observation:
**[Observation-r01-1]** If MBS Session is re-activated (after deactivation), each SMF holding associated PDU Sessions needs to provide an "Activate List of UE" per MBS Session to the AMF to perform Group Paging. S2-2101017 does not seem to discuss UEs in CM-CONNECTED. It seems that SMF needs to be aware of the UE's CM-state, which may increase CN signalling drastically.

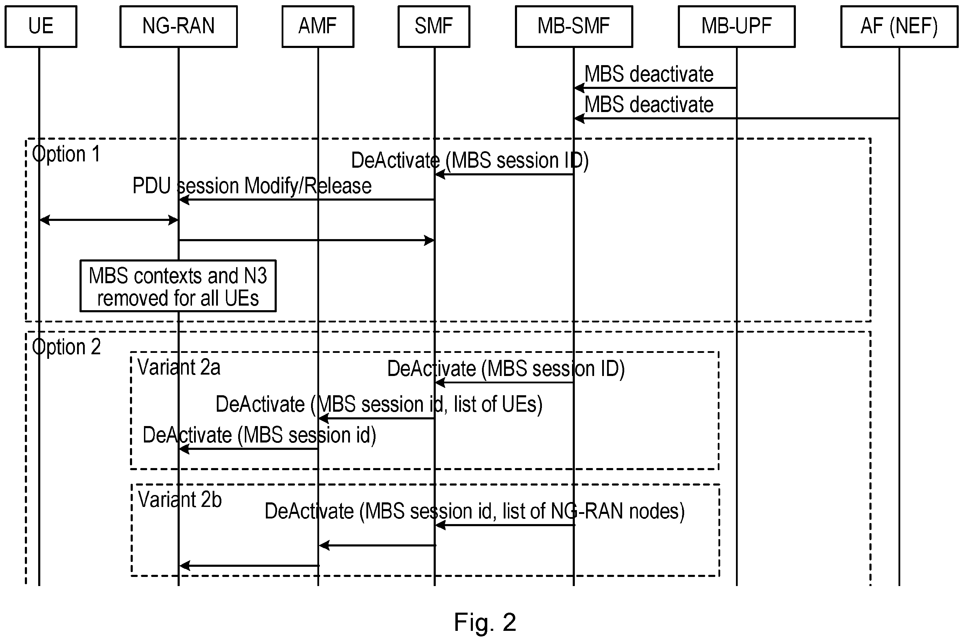

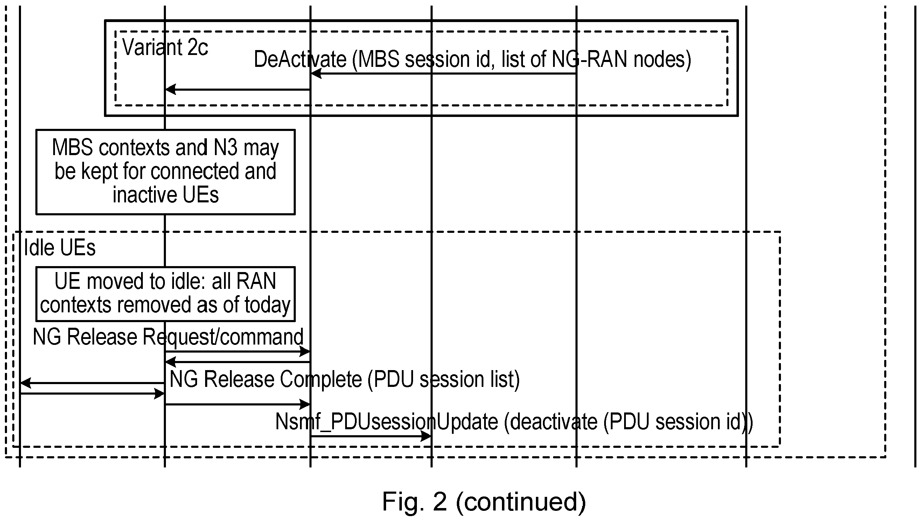

S2-2100343r01 also recites the following comparison and proposal from S2-2101017 (the "options" being referred to are those illustrated in figure 2 for implementing MBS session deactivation for the S2-2101017 solution (i.e., the SMF-centric approach)):
*The option 1 has the disadvantage to require lot of signalling messages: for all UEs there is individual PDU session release*/*modify procedure. These PDU session release*/*modify would also be sequential and take longer. Another drawback is that all PDU sessions associated UE MBS context information is removed for all UEs, even those UEs which the NG-RAN nodes will decide to keep RRC connected or RRC inactive, i.e. Proposal* 2 *is not addressed*
*In contrast option 2 only sends* a *few non-UE associated Deactivate messages (see below). Also each NG-RAN node can keep the MBS context information for connected and inactive UEs, which will facilitate the re-activation. Only for those UEs moved to RRC idle, legacy signalling will lead to PDU session deactivation.*
*The variant 2a is obviously more complicated. Also, it requires processing in all involved SMFs and all involved AMFs. There is also a risk of duplication of messages in the NG-RAN nodes unless AMF makes additional filtering.*
*The variants 2c avoids SMF impact and allows the largest signalling reduction.*
**Proposal 3:** *Each NG-RAN node receives a non-UE associated message indicating that the MBS session is deactivated. The deactivation message is sent by the MB-SMF via AMF.*

S2-2100343r01 also makes the following observations:
**[Observation-r01-2]:** In S2-2101017, if MBS Session is deactivated, MB-SMF sends NG-RAN list to AMF. If unicast shared N3 tunnel is used, then NG-RAN will contact MB-SMF via AMF to provide tunnel entity to the MB-SMF, however, MB-UPF is not supposed to maintain the list of NG-RAN.
**[Issue-1]** MB-SMF holding the "NG-RAN lists" is not aligned with the current 5G system design. Currently SMF does not have knowledge about the NG-RAN serving the UE. This shall not be changed in Rel-17 for 5MBS. It should rather be the AMF that informs the MB-SMF, once a UE has joined an MBS Session controlled by that MB-SMF. The AMF would need to know the MBS Session IDs and the associated MB-SMFs.
**[Issue-2]** Even if companies insists on having MB-SMF holding the "NG-RAN lists" without considering the current 5GS system design, the MB-SMF may not always be able to get the "NG-RAN lists" when multicast shared N3 tunnel is used between NG-RAN and MB-UPF, because the NG-RAN does not contact MB-SMF.
**[Observation-r01-3]:** In the SMF-centric approach, as presented in e.g. S2-2101017 assumes the SMF holds information that current 5GS design foresees to be held by the AMF (CM-state).

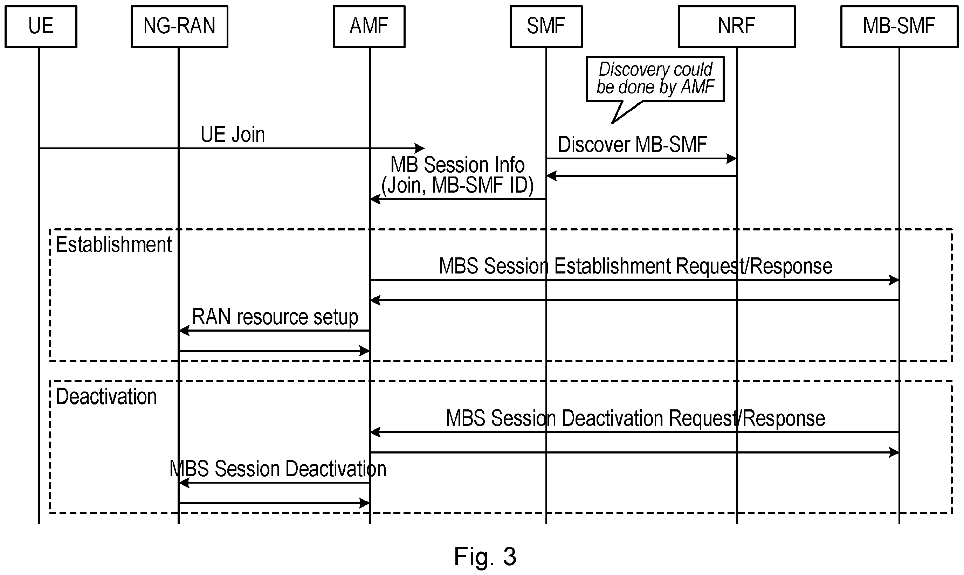

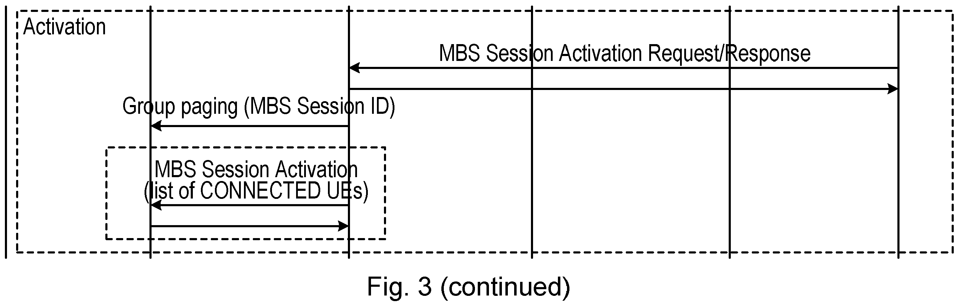

S2-2100343r01 also discusses the AMF-centric solution for the handling of MBS Sessions, as illustrated in figure 3 (although only shared delivery is shown). The following comparison and proposed way forward are made:
Comparing the alternative with AMF involvement (Figure 3) with SMF-centric approach (Figures 1 and 2), it can be seen that AMF involvement in MBS Session handling make the call flow consistent and much simpler, as far as the shared delivery is concerned.
**[Proposed way forward]:** Enhance the conclusion and involve AMF in MBS Session management, but UE join is still received in the SMF, i.e. the SMF informs the AMF of UE join, and the AMF discovers/select MB-SMF, interacts with MB-SMF.

### SUMMARY

There currently exist certain challenge(s). In the solution proposed in both S2-2100343 and S2-2101017, the signaling optimization assumes that the MBS Session Context is not released in the NG-RAN when receiving an MBS Session Deactivation Request from 5GC, and the user plane between the NG-RAN and MB-UPF will be kept. However, it is not meaningful to keep the MBS session context in the NG-RAN (nor the user plane between the NG-RAN and MB-UPF) if all joined UEs are no longer in a CM-CONNECTED state. As the period of time between MBS session deactivation and MBS session (re)activation may be long, keeping the MBS Session Context in the NG-RAN (as well the user plane between the NG-RAN and MB-UPF) after an MBS session has been deactivated is an inefficient use of network resources if there are no joined UEs in the CM-CONNECTED state. That is, the MBS Session Context (and the user plane between the NG-RAN and MB-UPF) will occupy unnecessary NG-RAN resources from both a local context and user plane resource point of view. This will result in decreased performance and capacity of the NG-RAN. For example, the user plane User Datagram Protocol (UDP) port or DL Tunnel Endpoint IDentifier (TEID) may be exhausted by inactive MBS sessions, resulting in the NG-RAN not being able to allocate a UDP port or DL TEID for potential new MBS sessions (i.e., the NG-RAN has to reject a request for a new MBS session).

When an NG-RAN decides to remove an MBS Session Context and release a user plane, the NG-RAN can release the user plane locally (e.g., via Internet Group Management Protocol (IGMP)/ Multicast Listener Discovery (MLD) LEAVE) where the user plane is transported by multicast. However, where the user plane is transported by unicast (e.g., where a dedicated General Packet Radio Service (GPRS) Tunnelling Protocol - User (GTP-U) tunnel is used and the DL Tunnel Endpoint IDentifier (TEID) is used by the MB-UPF), besides local release of the user plane in the NG-RAN, there are currently no mechanisms available to make the MB-UPF aware that such a decision has been taken by the NG-RAN. Consequently, the user plane is released in the NG-RAN but kept in the MB-UPF, meaning network resources are being occupied unnecessarily.

It is therefore beneficial to enable the NG-RAN to delete an MBS session context locally, as well as release user plane resources of an MB-UPF. When releasing the user plane resources, the NG-RAN can interact with an AMF to send a request to an MB-SMF, as the MB-SMF can inform the MB-UPF to release the resources accordingly. Thus, the user plane between NG-RAN and MB-UPF can be released as well.

Certain aspects of the present disclosure and their embodiments may provide solutions to these or other challenges. In one aspect, when NG-RAN detects that all joined UEs are not in CM-CONNECTED state for an INACTIVE MBS Session, NG-RAN releases the MBS Session Context and releases the user plane of the MBS Session.

In a further aspect, where the user plane is transported between NG-RAN and MB-UPF by unicast, a Release MBS User Plane Procedure is introduced between NG-RAN and AMF, between AMF to MB-SMF, and between MB-SMF to MB-UPF, so that the user plane between NG-RAN and MB-UPF can be released, once NG-RAN takes the decision to release MBS session context locally.

There are, proposed herein, various embodiments which address one or more of the issues disclosed herein, as disclosed in the appended claims.

Certain embodiments may provide one or more of the following technical advantage(s). By releasing the MBS Session Context once it is detected that all joined UEs have left connected mode, resources may be freed up for other purposes within the network. Further, for the scenario in which the user plane is transported between NG-RAN and MB-UPF by unicast, the proposed solution provides a mechanism by which the user plane can be released successfully in both NG-RAN and MB-UPF.

### BRIEF DESCRIPTION OF THE DRAWINGS

For a better understanding of examples of the present disclosure, and to show more clearly how the examples may be carried into effect, reference will now be made, by way of example only, to the following drawings in which:
Figure 1 is a signalling flow diagram illustrating an SMF-centric approach for MBS Session Re-Activation;
Figure 2 is a signalling flow diagram illustrating an SMF-centric approach for MBS Session Deactivation;
Figure 3 is a signalling flow diagram illustrating AMF involvement in MBS Session handling;
Figure 4 is a signalling flow diagram illustrating MBS Session deactivation according to embodiments of the disclosure;
Figure 5 is a flowchart illustrating a method in accordance with some embodiments;
Figure 6 schematically illustrates a virtualization apparatus in accordance with some embodiments;
Figure 7 is a flowchart illustrating a method in accordance with some embodiments;
Figure 8 schematically illustrates a virtualization apparatus in accordance with some embodiments;
Figure 9 is a flowchart illustrating a method in accordance with some embodiments;
Figure 10 schematically illustrates a virtualization apparatus in accordance with some embodiments;
Figure 11 schematically illustrates a wireless network in accordance with some embodiments;
Figure 12 schematically illustrates a user equipment in accordance with some embodiments; and
Figure 13 schematically illustrates a virtualization environment in accordance with some embodiments.

### DETAILED DESCRIPTION

Some of the embodiments contemplated herein will now be described more fully with reference to the accompanying drawings.

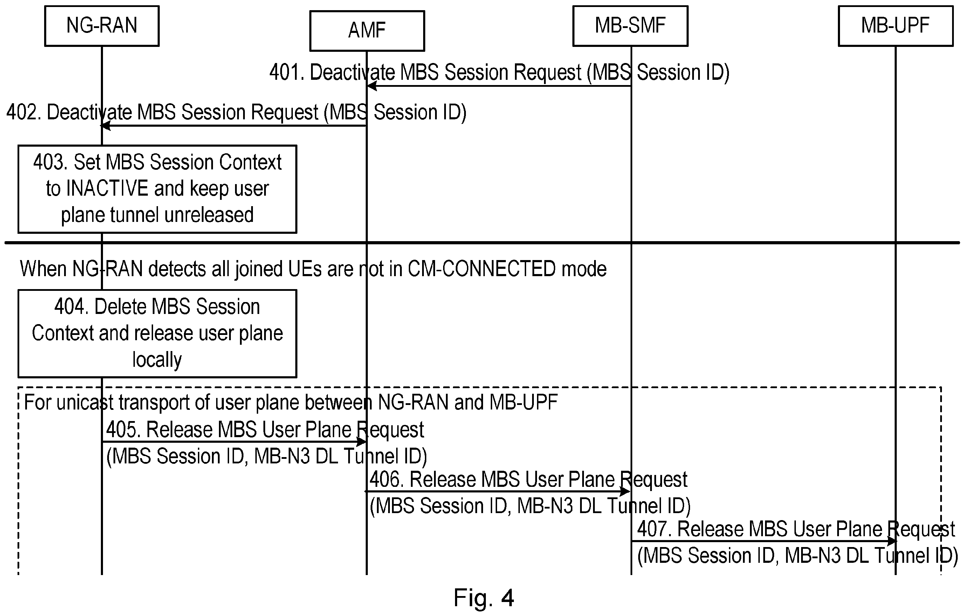

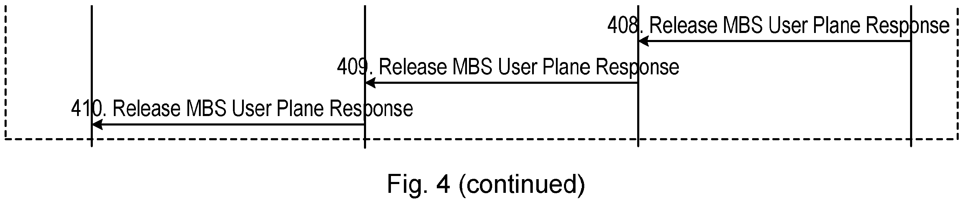

Figure 4 shows signalling according to embodiments of the disclosure, for deactivation of multicast or broadcast sessions such as MBS sessions.

401. When MB-SMF detects or is informed that the MBS Session is to be deactivated, MB-SMF sends Deactivate MBS Session Request to AMF with MBS Session ID.

402. The AMF sends Deactivate MBS Session Request to NG-RAN with the MBS Session ID.

403. The NG-RAN sets the MBS Session context to INACTIVE, and keeps the user plane tunnel unreleased when there are joined UEs in CM-CONNECTED state.

When NG-RAN detects all joined Ues are not in CM-CONNECTED state:
404. NG-RAN deletes the MBS Session Context and releases the user plane locally. For multicast transportation of the user plane, NG-RAN sends IGMP/MLD LEAVE message (e.g., to the joined UEs, or the MB-UPF). For unicast transportation of the user plane, NG-RAN releases the MB-N3 DL Tunnel ID.

Steps 405 to Step 410 apply to unicast transportation of user plane only:
405. NG-RAN sends Release MBS User Plane Request to AMF with the MBS Session ID and MB-N3 DL Tunnel iD to identify the user plane tunnel.
406. AMF sends Release MBS User Plane Request to MB-SMF with the MBS Session ID and MB-N3 DL Tunnel ID to identify the user plane tunnel.
407. MB-SMF sends Release MBS User Plane Request to MB-UPF with the MBS Session ID and MB-N3 DL Tunnel ID to identify the user plane tunnel.
408. MB-UPF release the user plane identified by the MBS Session ID and MB-N3 DL Tunnel ID. MB-UPF send Release MBS User Plane Response to MB-SMF. Step 7 and Step 8 can be implemented in packet forwarding control protocol (PFCP).
409. MB-SMF send Release MBS User Plane Response to AMF.
410. AMF send Release MBS User Plane Response to NG-RAN.

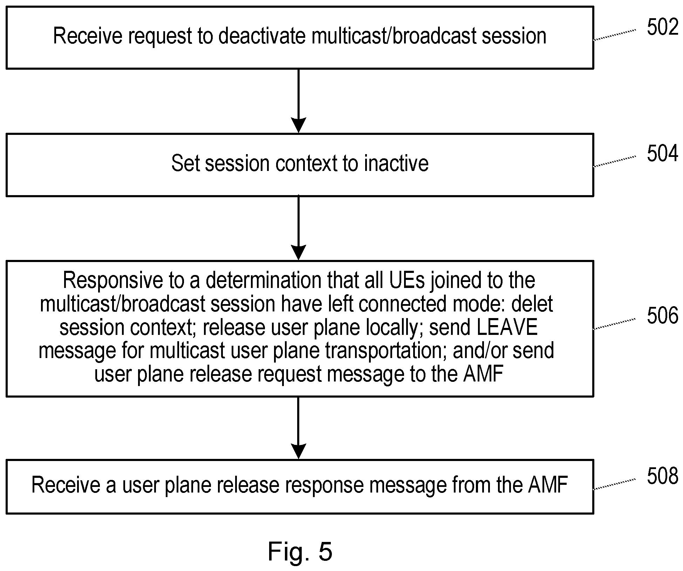

Figure 5 depicts a method in accordance with particular embodiments. The method may be performed by a base station or any other radio access network node, such as a gNB, an eNB, the network node 1160 described below, or an NG-RAN network function. In some respects, the method depicted in Figure 5 may correspond to the signalling of the NG-RAN described with respect to Figure 4 above.

The method begins at step 502, in which the base station receives a deactivation request message (e.g., a Deactivate MBS Session Request message) requesting deactivation of a multicast or broadcast session (e.g., a 5MBS session) associated with a plurality of wireless devices served by the base station. The deactivation request message may comprise an identity of the multicast or broadcast session. The deactivation request message may be received from a core network entity, such as an AMF. This step may correspond to step 2 of Figure 4 described above.

In step 504, responsive to receipt of the deactivation request message in step 502, the base station sets the context of the multicast or broadcast session to inactive. A user plane tunnel associated with one or more (or all) of the wireless devices, e.g., between the radio access network (NG-RAN) and the UPF (e.g., MB-UPF), may be maintained. The user plane tunnel may be maintained while at least one of the wireless devices remains in a connected mode. Step 504 may correspond to step 3 of Figure 4 described above.

In step 506, responsive to a determination that none of the plurality of wireless devices are in a connected mode (or alternatively, that all of the plurality of wireless devices have left the connected mode), the base station releases or deletes a context of the multicast or broadcast session. The connected mode may relate to a connection between each wireless device and a core network node, function or entity, such as the AMF. Step 506 may correspond to step 4 described above with respect to Figure 4.

The base station may additionally, in step 506, release the user plane locally, e.g., release resources associated with the user plane, such as downlink user plane tunnels for which the base station is an endpoint. The base station may additionally or alternatively, in step 506, transmit an IGMP/MLD LEAVE message in respect of one or more wireless devices of the plurality of wireless devices for which a user plane is transported via multicast. The base station may additionally or alternatively, in step 506, transmit a release user plane request message to a core network node, function or entity (e.g., an AMF) in respect of one or more wireless devices of the plurality of wireless devices for which a user plane is transported via unicast. In one embodiment, the release user plane request message comprises one or more of: an indication of the identity of the multicast or broadcast session; and an indication of a downlink tunnel identity associated with the one or more wireless devices for which the user plane is transported via unicast. Step 506 may additionally or alternatively correspond to step 5 described above with respect to Figure 4.

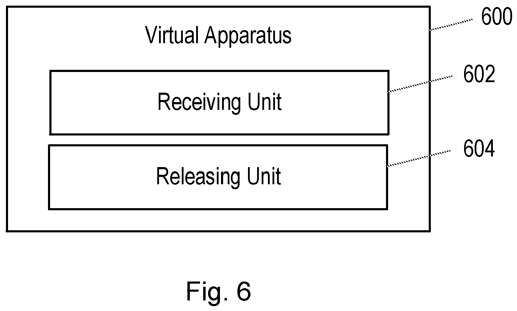

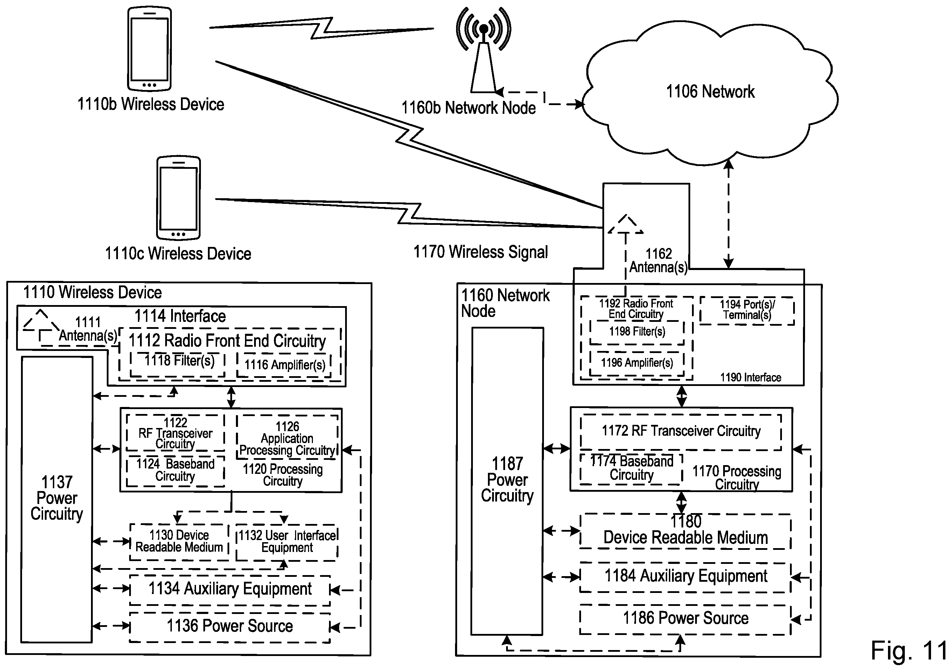

The release user plane request message may enable a user plane function to release one or more downlink tunnels associated with the one or more wireless devices for which the user plane is transported via unicast. Thus, in step 508, the base station receives a release user plane response message (e.g., from the AMF), indicating that the downlink tunnels have been so released. Step 508 may correspond to step 10 described above with respect to Figure 4. Figure 6 illustrates a schematic block diagram of an apparatus 600 in a wireless network (for example, the wireless network shown in Figure 11). The apparatus may be implemented in a network node (e.g., a radio access network node, function or entity, such as a base station or network node 1160 shown in Figure 11). Apparatus 600 is operable to carry out the example method described with reference to Figure 5 and possibly any other processes or methods disclosed herein. It is also to be understood that the method of Figure 5 is not necessarily carried out solely by apparatus 600. At least some operations of the method can be performed by one or more other entities.

Virtual Apparatus 600 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause receiving unit 602, releasing unit 604, and any other suitable units of apparatus 600 to perform corresponding functions according one or more embodiments of the present disclosure.

As illustrated in Figure 6, apparatus 600 includes receiving unit 602 and releasing unit 604. Receiving unit 602 is configured to receive a deactivation request message requesting deactivation of a multicast or broadcast session associated with a plurality of wireless devices served by the base station. Releasing unit 604 is configured to release or delete a context of the multicast or broadcast session responsive to a determination that none of the plurality of wireless devices are in a connected mode.

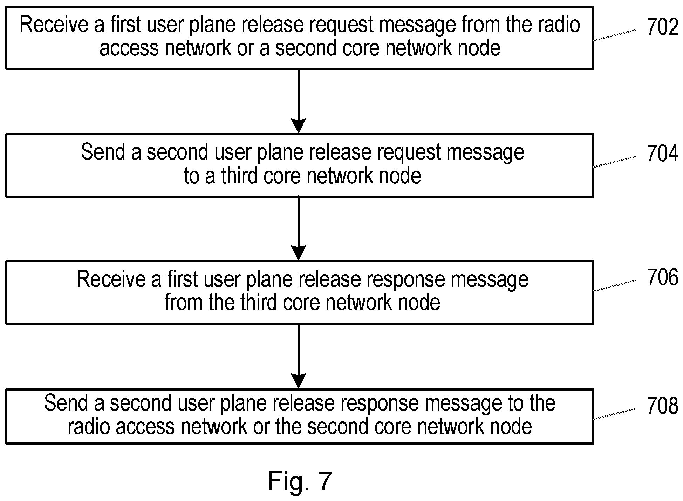

Figure 7 depicts a method in accordance with particular embodiments. The method may be performed by a core network node, function or entity, such as an AMF or an MB-SMF. In some respects, the method depicted in Figure 7 may correspond to the signalling of the AMF and/or the MB-SMF described with respect to Figure 4 above.

The method begins at step 702, in which the core network node receives a first user plane release request message from a radio access network entity or a second core network entity. The first user plane release request message comprises a request for a downlink tunnel associated with unicast of user plane data for one or more wireless devices in a multicast or broadcast session to be released.

In step 704, the core network node sends a second user plane release request message to a third core network entity. The second user plane release request message comprises a request for the downlink tunnel associated with unicast of user plane data for one or more wireless devices in a multicast or broadcast session to be released.

In step 706, the core network node receives a first user plane release response message from the third core network node.

In step 708, the core network node sends a second user plane release response message to the radio access network or the second core network node.

In some embodiments, the method shown in Figure 7 corresponds to the signalling of the AMF shown in Figure 4. In these embodiments, the first core network node is the AMF; the first user plane release request message is received from the radio access network; and the third core network node comprises an SMF or MB-SMF. Steps 702, 704, 706 and 708 may correspond to steps 5, 6, 9 and 10 respectively of Figure 4.

In other embodiments, the method shown in Figure 7 corresponds to the signalling of the MB-SMF shown in Figure 4. In these embodiments, the first core network node is the MB-SMF; the first user plane release request message is received from the second core network node (e.g., the AMF); and the third core network node comprises a MB-UPF. Steps 702, 704, 706 and 708 may correspond to steps 6, 7, 8 and 9 respectively of Figure 4.

One or more of the first and second user plane release request messages may comprise one or more of: an identity of the multicast or broadcast session; and an identity of the downlink tunnel. Additionally or alternatively, one or more of the first and second user plane release response messages may comprise one or more of: an indication that the downlink tunnel has been released (e.g., by the MB-UPF); an identity of the multicast or broadcast session; and an identity of the downlink tunnel.

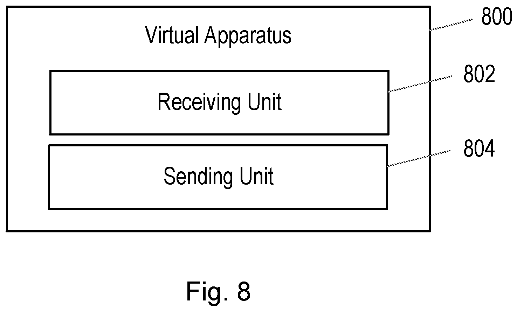

Figure 8 illustrates a schematic block diagram of an apparatus 800 in a wireless network (for example, the wireless network shown in Figure 11). The apparatus may be implemented in a core network node, function or entity (e.g., network node 1160 shown in Figure 11 and/or a core network node implemented in the wireless network 1106, such as an AMF, SMF or MB-SMF). Apparatus 800 is operable to carry out the example method described with reference to Figure 7 and possibly any other processes or methods disclosed herein. It is also to be understood that the method of Figure 7 is not necessarily carried out solely by apparatus 800. At least some operations of the method can be performed by one or more other entities.

Virtual Apparatus 800 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause receiving unit 802 and sending unit 804, and any other suitable units of apparatus 800 to perform corresponding functions according one or more embodiments of the present disclosure.

As illustrated in Figure 8, apparatus 800 includes receiving unit 802 and sending unit 804. Receiving unit 802 is configured to receive a first user plane release request message from a radio access network entity or a second core network entity. The first user plane release request message comprises a request for a downlink tunnel associated with unicast of user plane data for one or more wireless devices in a multicast or broadcast session to be released. Sending unit 804 is configured to send a second user plane release request message to a third core network entity. The second user plane release request message comprises a request for the downlink tunnel associated with unicast of user plane data for one or more wireless devices in a multicast or broadcast session to be released.

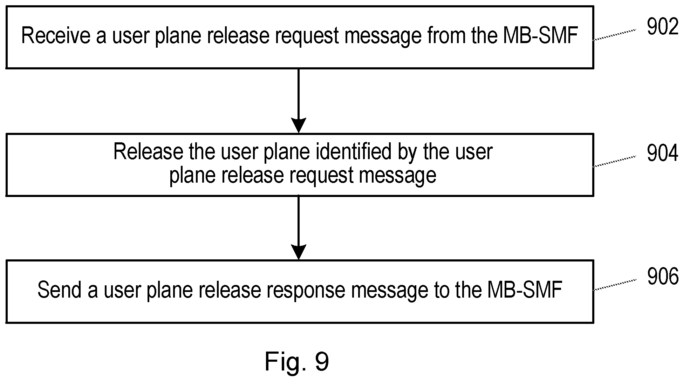

Figure 9 depicts a method in accordance with particular embodiments. The method may be performed by a core network node, function or entity, such as a UPF or an MB-UPF. In some respects the method depicted in Figure 9 may correspond to the signalling of the MB-UPF described with respect to Figure 4 above.

The method begins at step 902, in which the core network node receives a user plane release request message from a second core network entity (e.g., a SMF or MB-SMF). The user plane release request message comprises a request for a downlink tunnel associated with unicast of user plane data for one or more wireless devices in a multicast or broadcast session to be released. The user plane release request message may comprise one or more of an identity of the multicast or broadcast session; and an identity of the downlink tunnel. Step 902 may correspond to step 7 in Figure 4 described above.

In step 904, the core network node releases the downlink tunnel associated with unicast of user plane data for the one or more wireless devices in a multicast or broadcast session.

In step 906, the core network node sends a release user plane response message to the second core network node. The user plane release response message may comprise one or more of: an indication that the downlink tunnel has been released; an identity of the multicast or broadcast session; and an identity of the downlink tunnel. Step 906 may correspond to step 8 of Figure 4 described above.

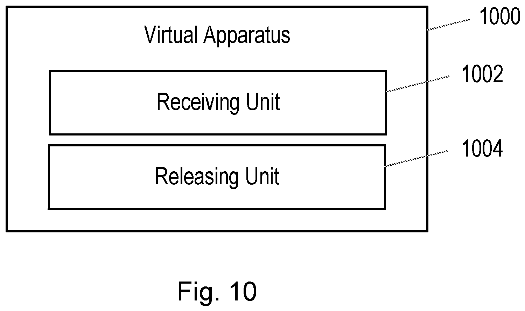

Figure 10 illustrates a schematic block diagram of an apparatus 1000 in a wireless network (for example, the wireless network shown in Figure 11). The apparatus may be implemented in a core network node, function or entity (e.g., network node 1160 shown in Figure 11 and/or a core network node implemented in the wireless network 1106, such as a UPF or MB-UPF). Apparatus 1000 is operable to carry out the example method described with reference to Figure 9 and possibly any other processes or methods disclosed herein. It is also to be understood that the method of Figure 9 is not necessarily carried out solely by apparatus 1000. At least some operations of the method can be performed by one or more other entities.

Virtual Apparatus 1000 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause receiving unit 1002, releasing unit 1004, and any other suitable units of apparatus 1000 to perform corresponding functions according one or more embodiments of the present disclosure.

As illustrated in Figure 10, apparatus 1000 includes receiving unit 1002 and releasing unit 1004. Receiving unit 1002 is configured to receive a user plane release request message from a second core network entity. The user plane release request message comprises a request for a downlink tunnel associated with unicast of user plane data for one or more wireless devices in a multicast or broadcast session to be released. Releasing unit 1004 is configured to release the downlink tunnel associated with unicast of user plane data for the one or more wireless devices in a multicast or broadcast session.

The term "unit" may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Although the subject matter described herein may be implemented in any appropriate type of system using any suitable components, the embodiments disclosed herein are described in relation to a wireless network, such as the example wireless network illustrated in Figure 11. For simplicity, the wireless network of Figure 11 only depicts network 1106, network nodes 1160 and 1160b, and WDs 1110, 1110b, and 1110c. In practice, a wireless network may further include any additional elements suitable to support communication between wireless devices or between a wireless device and another communication device, such as a landline telephone, a service provider, or any other network node or end device. Of the illustrated components, network node 1160 and wireless device (WD) 1110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices. In particular, 1106 may comprise one or more core network nodes, functions or entities such as those described above with respect to Figure 4, e.g., an AMF, an SMF (MB-SMF), and a UPF (MB-UPF).

Network node 1160 and WD 1110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 11, network node 1160 includes processing circuitry 1170, device readable medium 1180, interface 1190, auxiliary equipment 1184, power source 1186, power circuitry 1187, and antenna 1162. Although network node 1160 illustrated in the example wireless network of Figure 11 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1160 are depicted as single boxes located within a larger box, or nested within multiple boxes, in practice, a network node may comprise multiple different physical components that make up a single illustrated component (e.g., device readable medium 1180 may comprise multiple separate hard drives as well as multiple RAM modules).

Similarly, network node 1160 may be composed of multiple physically separate components (e.g., a NodeB component and a RNC component, or a BTS component and a BSC component, etc.), which may each have their own respective components. In certain scenarios in which network node 1160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1160 may be configured to support multiple radio access technologies (RATs). In such embodiments, some components may be duplicated (e.g., separate device readable medium 1180 for the different RATs) and some components may be reused (e.g., the same antenna 1162 may be shared by the RATs). Network node 1160 may also include multiple sets of the various illustrated components for different wireless technologies integrated into network node 1160, such as, for example, GSM, WCDMA, LTE, NR, WiFi, or Bluetooth wireless technologies. These wireless technologies may be integrated into the same or different chip or set of chips and other components within network node 1160.

Processing circuitry 1170 is configured to perform any determining, calculating, or similar operations (e.g., certain obtaining operations) described herein as being provided by a network node. These operations performed by processing circuitry 1170 may include processing information obtained by processing circuitry 1170 by, for example, converting the obtained information into other information, comparing the obtained information or converted information to information stored in the network node, and/or performing one or more operations based on the obtained information or converted information, and as a result of said processing making a determination.

Processing circuitry 1170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1160 components, such as device readable medium 1180, network node 1160 functionality. For example, processing circuitry 1170 may execute instructions stored in device readable medium 1180 or in memory within processing circuitry 1170. Such functionality may include providing any of the various wireless features, functions, or benefits discussed herein. In some embodiments, processing circuitry 1170 may include a system on a chip (SOC).

In some embodiments, processing circuitry 1170 may include one or more of radio frequency (RF) transceiver circuitry 1172 and baseband processing circuitry 1174. In some embodiments, radio frequency (RF) transceiver circuitry 1172 and baseband processing circuitry 1174 may be on separate chips (or sets of chips), boards, or units, such as radio units and digital units. In alternative embodiments, part or all of RF transceiver circuitry 1172 and baseband processing circuitry 1174 may be on the same chip or set of chips, boards, or units.

In certain embodiments, some or all of the functionality described herein as being provided by a network node, base station, eNB or other such network device may be performed by processing circuitry 1170 executing instructions stored on device readable medium 1180 or memory within processing circuitry 1170. In alternative embodiments, some or all of the functionality may be provided by processing circuitry 1170 without executing instructions stored on a separate or discrete device readable medium, such as in a hard-wired manner. In any of those embodiments, whether executing instructions stored on a device readable storage medium or not, processing circuitry 1170 can be configured to perform the described functionality. The benefits provided by such functionality are not limited to processing circuitry 1170 alone or to other components of network node 1160, but are enjoyed by network node 1160 as a whole, and/or by end users and the wireless network generally.

Device readable medium 1180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1170. Device readable medium 1180 may store any suitable instructions, data or information, including a computer program, software, an application including one or more of logic, rules, code, tables, etc. and/or other instructions capable of being executed by processing circuitry 1170 and, utilized by network node 1160. Device readable medium 1180 may be used to store any calculations made by processing circuitry 1170 and/or any data received via interface 1190. In some embodiments, processing circuitry 1170 and device readable medium 1180 may be considered to be integrated.

Interface 1190 is used in the wired or wireless communication of signalling and/or data between network node 1160, network 1106, and/or WDs 1110. As illustrated, interface 1190 comprises port(s)/terminal(s) 1194 to send and receive data, for example to and from network 1106 over a wired connection. Interface 1190 also includes radio front end circuitry 1192 that may be coupled to, or in certain embodiments a part of, antenna 1162. Radio front end circuitry 1192 comprises filters 1198 and amplifiers 1196. Radio front end circuitry 1192 may be connected to antenna 1162 and processing circuitry 1170. Radio front end circuitry may be configured to condition signals communicated between antenna 1162 and processing circuitry 1170. Radio front end circuitry 1192 may receive digital data that is to be sent out to other network nodes or WDs via a wireless connection. Radio front end circuitry 1192 may convert the digital data into a radio signal having the appropriate channel and bandwidth parameters using a combination of filters 1198 and/or amplifiers 1196. The radio signal may then be transmitted via antenna 1162. Similarly, when receiving data, antenna 1162 may collect radio signals which are then converted into digital data by radio front end circuitry 1192. The digital data may be passed to processing circuitry 1170. In other embodiments, the interface may comprise different components and/or different combinations of components.

In certain alternative embodiments, network node 1160 may not include separate radio front end circuitry 1192, instead, processing circuitry 1170 may comprise radio front end circuitry and may be connected to antenna 1162 without separate radio front end circuitry 1192. Similarly, in some embodiments, all or some of RF transceiver circuitry 1172 may be considered a part of interface 1190. In still other embodiments, interface 1190 may include one or more ports or terminals 1194, radio front end circuitry 1192, and RF transceiver circuitry 1172, as part of a radio unit (not shown), and interface 1190 may communicate with baseband processing circuitry 1174, which is part of a digital unit (not shown).

Antenna 1162 may include one or more antennas, or antenna arrays, configured to send and/or receive wireless signals. Antenna 1162 may be coupled to radio front end circuitry 1190 and may be any type of antenna capable of transmitting and receiving data and/or signals wirelessly. In some embodiments, antenna 1162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1162 may be separate from network node 1160 and may be connectable to network node 1160 through an interface or port.

Antenna 1162, interface 1190, and/or processing circuitry 1170 may be configured to perform any receiving operations and/or certain obtaining operations described herein as being performed by a network node. Any information, data and/or signals may be received from a wireless device, another network node and/or any other network equipment. Similarly, antenna 1162, interface 1190, and/or processing circuitry 1170 may be configured to perform any transmitting operations described herein as being performed by a network node. Any information, data and/or signals may be transmitted to a wireless device, another network node and/or any other network equipment.

Power circuitry 1187 may comprise, or be coupled to, power management circuitry and is configured to supply the components of network node 1160 with power for performing the functionality described herein. Power circuitry 1187 may receive power from power source 1186. Power source 1186 and/or power circuitry 1187 may be configured to provide power to the various components of network node 1160 in a form suitable for the respective components (e.g., at a voltage and current level needed for each respective component). Power source 1186 may either be included in, or external to, power circuitry 1187 and/or network node 1160. For example, network node 1160 may be connectable to an external power source (e.g., an electricity outlet) via an input circuitry or interface such as an electrical cable, whereby the external power source supplies power to power circuitry 1187. As a further example, power source 1186 may comprise a source of power in the form of a battery or battery pack which is connected to, or integrated in, power circuitry 1187. The battery may provide backup power should the external power source fail. Other types of power sources, such as photovoltaic devices, may also be used.

Alternative embodiments of network node 1160 may include additional components beyond those shown in Figure 11 that may be responsible for providing certain aspects of the network node's functionality, including any of the functionality described herein and/or any functionality necessary to support the subject matter described herein. For example, network node 1160 may include user interface equipment to allow input of information into network node 1160 and to allow output of information from network node 1160. This may allow a user to perform diagnostic, maintenance, repair, and other administrative functions for network node 1160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1110 includes antenna 1111, interface 1114, processing circuitry 1120, device readable medium 1130, user interface equipment 1132, auxiliary equipment 1134, power source 1136 and power circuitry 1137. WD 1110 may include multiple sets of one or more of the illustrated components for different wireless technologies supported by WD 1110, such as, for example, GSM, WCDMA, LTE, NR, WiFi, WiMAX, or Bluetooth wireless technologies, just to mention a few. These wireless technologies may be integrated into the same or different chips or set of chips as other components within WD 1110.

Antenna 1111 may include one or more antennas or antenna arrays, configured to send and/or receive wireless signals, and is connected to interface 1114. In certain alternative embodiments, antenna 1111 may be separate from WD 1110 and be connectable to WD 1110 through an interface or port. Antenna 1111, interface 1114, and/or processing circuitry 1120 may be configured to perform any receiving or transmitting operations described herein as being performed by a WD. Any information, data and/or signals may be received from a network node and/or another WD. In some embodiments, radio front end circuitry and/or antenna 1111 may be considered an interface.

As illustrated, interface 1114 comprises radio front end circuitry 1112 and antenna 1111. Radio front end circuitry 1112 comprise one or more filters 1118 and amplifiers 1116. Radio front end circuitry 1114 is connected to antenna 1111 and processing circuitry 1120, and is configured to condition signals communicated between antenna 1111 and processing circuitry 1120. Radio front end circuitry 1112 may be coupled to or a part of antenna 1111. In some embodiments, WD 1110 may not include separate radio front end circuitry 1112; rather, processing circuitry 1120 may comprise radio front end circuitry and may be connected to antenna 1111. Similarly, in some embodiments, some or all of RF transceiver circuitry 1122 may be considered a part of interface 1114. Radio front end circuitry 1112 may receive digital data that is to be sent out to other network nodes or WDs via a wireless connection. Radio front end circuitry 1112 may convert the digital data into a radio signal having the appropriate channel and bandwidth parameters using a combination of filters 1118 and/or amplifiers 1116. The radio signal may then be transmitted via antenna 1111. Similarly, when receiving data, antenna 1111 may collect radio signals which are then converted into digital data by radio front end circuitry 1112. The digital data may be passed to processing circuitry 1120. In other embodiments, the interface may comprise different components and/or different combinations of components.

Processing circuitry 1120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1110 components, such as device readable medium 1130, WD 1110 functionality. Such functionality may include providing any of the various wireless features or benefits discussed herein. For example, processing circuitry 1120 may execute instructions stored in device readable medium 1130 or in memory within processing circuitry 1120 to provide the functionality disclosed herein.

As illustrated, processing circuitry 1120 includes one or more of RF transceiver circuitry 1122, baseband processing circuitry 1124, and application processing circuitry 1126. In other embodiments, the processing circuitry may comprise different components and/or different combinations of components. In certain embodiments processing circuitry 1120 of WD 1110 may comprise a SOC. In some embodiments, RF transceiver circuitry 1122, baseband processing circuitry 1124, and application processing circuitry 1126 may be on separate chips or sets of chips. In alternative embodiments, part or all of baseband processing circuitry 1124 and application processing circuitry 1126 may be combined into one chip or set of chips, and RF transceiver circuitry 1122 may be on a separate chip or set of chips. In still alternative embodiments, part or all of RF transceiver circuitry 1122 and baseband processing circuitry 1124 may be on the same chip or set of chips, and application processing circuitry 1126 may be on a separate chip or set of chips. In yet other alternative embodiments, part or all of RF transceiver circuitry 1122, baseband processing circuitry 1124, and application processing circuitry 1126 may be combined in the same chip or set of chips. In some embodiments, RF transceiver circuitry 1122 may be a part of interface 1114. RF transceiver circuitry 1122 may condition RF signals for processing circuitry 1120.

In certain embodiments, some or all of the functionality described herein as being performed by a WD may be provided by processing circuitry 1120 executing instructions stored on device readable medium 1130, which in certain embodiments may be a computer-readable storage medium. In alternative embodiments, some or all of the functionality may be provided by processing circuitry 1120 without executing instructions stored on a separate or discrete device readable storage medium, such as in a hard-wired manner. In any of those particular embodiments, whether executing instructions stored on a device readable storage medium or not, processing circuitry 1120 can be configured to perform the described functionality. The benefits provided by such functionality are not limited to processing circuitry 1120 alone or to other components of WD 1110, but are enjoyed by WD 1110 as a whole, and/or by end users and the wireless network generally.

Processing circuitry 1120 may be configured to perform any determining, calculating, or similar operations (e.g., certain obtaining operations) described herein as being performed by a WD. These operations, as performed by processing circuitry 1120, may include processing information obtained by processing circuitry 1120 by, for example, converting the obtained information into other information, comparing the obtained information or converted information to information stored by WD 1110, and/or performing one or more operations based on the obtained information or converted information, and as a result of said processing making a determination.

Device readable medium 1130 may be operable to store a computer program, software, an application including one or more of logic, rules, code, tables, etc. and/or other instructions capable of being executed by processing circuitry 1120. Device readable medium 1130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1120. In some embodiments, processing circuitry 1120 and device readable medium 1130 may be considered to be integrated.

User interface equipment 1132 may provide components that allow for a human user to interact with WD 1110. Such interaction may be of many forms, such as visual, audial, tactile, etc. User interface equipment 1132 may be operable to produce output to the user and to allow the user to provide input to WD 1110. The type of interaction may vary depending on the type of user interface equipment 1132 installed in WD 1110. For example, if WD 1110 is a smart phone, the interaction may be via a touch screen; if WD 1110 is a smart meter, the interaction may be through a screen that provides usage (e.g., the number of gallons used) or a speaker that provides an audible alert (e.g., if smoke is detected). User interface equipment 1132 may include input interfaces, devices and circuits, and output interfaces, devices and circuits. User interface equipment 1132 is configured to allow input of information into WD 1110, and is connected to processing circuitry 1120 to allow processing circuitry 1120 to process the input information. User interface equipment 1132 may include, for example, a microphone, a proximity or other sensor, keys/buttons, a touch display, one or more cameras, a USB port, or other input circuitry. User interface equipment 1132 is also configured to allow output of information from WD 1110, and to allow processing circuitry 1120 to output information from WD 1110. User interface equipment 1132 may include, for example, a speaker, a display, vibrating circuitry, a USB port, a headphone interface, or other output circuitry. Using one or more input and output interfaces, devices, and circuits, of user interface equipment 1132, WD 1110 may communicate with end users and/or the wireless network, and allow them to benefit from the functionality described herein.

Auxiliary equipment 1134 is operable to provide more specific functionality which may not be generally performed by WDs. This may comprise specialized sensors for doing measurements for various purposes, interfaces for additional types of communication such as wired communications etc. The inclusion and type of components of auxiliary equipment 1134 may vary depending on the embodiment and/or scenario.

Power source 1136 may, in some embodiments, be in the form of a battery or battery pack. Other types of power sources, such as an external power source (e.g., an electricity outlet), photovoltaic devices or power cells, may also be used. WD 1110 may further comprise power circuitry 1137 for delivering power from power source 1136 to the various parts of WD 1110 which need power from power source 1136 to carry out any functionality described or indicated herein. Power circuitry 1137 may in certain embodiments comprise power management circuitry. Power circuitry 1137 may additionally or alternatively be operable to receive power from an external power source; in which case WD 1110 may be connectable to the external power source (such as an electricity outlet) via input circuitry or an interface such as an electrical power cable. Power circuitry 1137 may also in certain embodiments be operable to deliver power from an external power source to power source 1136. This may be, for example, for the charging of power source 1136. Power circuitry 1137 may perform any formatting, converting, or other modification to the power from power source 1136 to make the power suitable for the respective components of WD 1110 to which power is supplied.

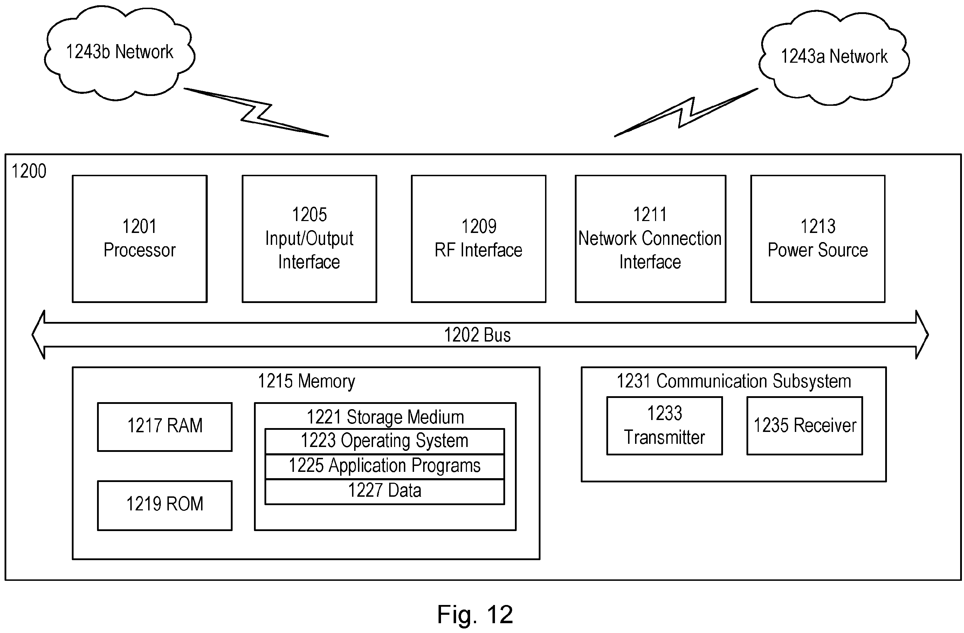

Figure 12 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1200 may be any UE identified by the 3^{rd} Generation Partnership Project (3GPP), including a NB-loT UE, a machine type communication (MTC) UE, and/or an enhanced MTC (eMTC) UE. UE 1200, as illustrated in Figure 12, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeably. Accordingly, although Figure 12 is a UE, the components discussed herein are equally applicable to a WD, and vice-versa.

In Figure 12, UE 1200 includes processing circuitry 1201 that is operatively coupled to input/output interface 1205, radio frequency (RF) interface 1209, network connection interface 1211, memory 1215 including random access memory (RAM) 1217, read-only memory (ROM) 1219, and storage medium 1221 or the like, communication subsystem 1231, power source 1233, and/or any other component, or any combination thereof. Storage medium 1221 includes operating system 1223, application program 1225, and data 1227. In other embodiments, storage medium 1221 may include other similar types of information. Certain Ues may utilize all of the components shown in Figure 12, or only a subset of the components. The level of integration between the components may vary from one UE to another UE. Further, certain Ues may contain multiple instances of a component, such as multiple processors, memories, transceivers, transmitters, receivers, etc.

In Figure 12, processing circuitry 1201 may be configured to process computer instructions and data. Processing circuitry 1201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1201 may include two central processing units (CPUs). Data may be information in a form suitable for use by a computer.

In the depicted embodiment, input/output interface 1205 may be configured to provide a communication interface to an input device, output device, or input and output device. UE 1200 may be configured to use an output device via input/output interface 1205. An output device may use the same type of interface port as an input device. For example, a USB port may be used to provide input to and output from UE 1200. The output device may be a speaker, a sound card, a video card, a display, a monitor, a printer, an actuator, an emitter, a smartcard, another output device, or any combination thereof. UE 1200 may be configured to use an input device via input/output interface 1205 to allow a user to capture information into UE 1200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 12, RF interface 1209 may be configured to provide a communication interface to RF components such as a transmitter, a receiver, and an antenna. Network connection interface 1211 may be configured to provide a communication interface to network 1243a. Network 1243a may encompass wired and/or wireless networks such as a local-area network (LAN), a wide-area network (WAN), a computer network, a wireless network, a telecommunications network, another like network or any combination thereof. For example, network 1243a may comprise a Wi-Fi network. Network connection interface 1211 may be configured to include a receiver and a transmitter interface used to communicate with one or more other devices over a communication network according to one or more communication protocols, such as Ethernet, TCP/IP, SONET, ATM, or the like. Network connection interface 1211 may implement receiver and transmitter functionality appropriate to the communication network links (e.g., optical, electrical, and the like). The transmitter and receiver functions may share circuit components, software or firmware, or alternatively may be implemented separately.

RAM 1217 may be configured to interface via bus 1202 to processing circuitry 1201 to provide storage or caching of data or computer instructions during the execution of software programs such as the operating system, application programs, and device drivers. ROM 1219 may be configured to provide computer instructions or data to processing circuitry 1201. For example, ROM 1219 may be configured to store invariant low-level system code or data for basic system functions such as basic input and output (I/O), startup, or reception of keystrokes from a keyboard that are stored in a non-volatile memory. Storage medium 1221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1221 may be configured to include operating system 1223, application program 1225 such as a web browser application, a widget or gadget engine or another application, and data file 1227. Storage medium 1221 may store, for use by UE 1200, any of a variety of various operating systems or combinations of operating systems.

Storage medium 1221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1221 may allow UE 1200 to access computer-executable instructions, application programs or the like, stored on transitory or non-transitory memory media, to off-load data, or to upload data. An article of manufacture, such as one utilizing a communication system may be tangibly embodied in storage medium 1221, which may comprise a device readable medium.

In Figure 12, processing circuitry 1201 may be configured to communicate with network 1243b using communication subsystem 1231. Network 1243a and network 1243b may be the same network or networks or different network or networks. Communication subsystem 1231 may be configured to include one or more transceivers used to communicate with network 1243b. For example, communication subsystem 1231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1233 and/or receiver 1235 to implement transmitter or receiver functionality, respectively, appropriate to the RAN links (e.g., frequency allocations and the like). Further, transmitter 1233 and receiver 1235 of each transceiver may share circuit components, software or firmware, or alternatively may be implemented separately.

In the illustrated embodiment, the communication functions of communication subsystem 1231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1231 may include cellular communication, Wi-Fi communication, Bluetooth communication, and GPS communication. Network 1243b may encompass wired and/or wireless networks such as a local-area network (LAN), a wide-area network (WAN), a computer network, a wireless network, a telecommunications network, another like network or any combination thereof. For example, network 1243b may be a cellular network, a Wi-Fi network, and/or a near-field network. Power source 1213 may be configured to provide alternating current (AC) or direct current (DC) power to components of UE 1200.

The features, benefits and/or functions described herein may be implemented in one of the components of UE 1200 or partitioned across multiple components of UE 1200. Further, the features, benefits, and/or functions described herein may be implemented in any combination of hardware, software or firmware. In one example, communication subsystem 1231 may be configured to include any of the components described herein. Further, processing circuitry 1201 may be configured to communicate with any of such components over bus 1202. In another example, any of such components may be represented by program instructions stored in memory that when executed by processing circuitry 1201 perform the corresponding functions described herein. In another example, the functionality of any of such components may be partitioned between processing circuitry 1201 and communication subsystem 1231. In another example, the non-computationally intensive functions of any of such components may be implemented in software or firmware and the computationally intensive functions may be implemented in hardware.

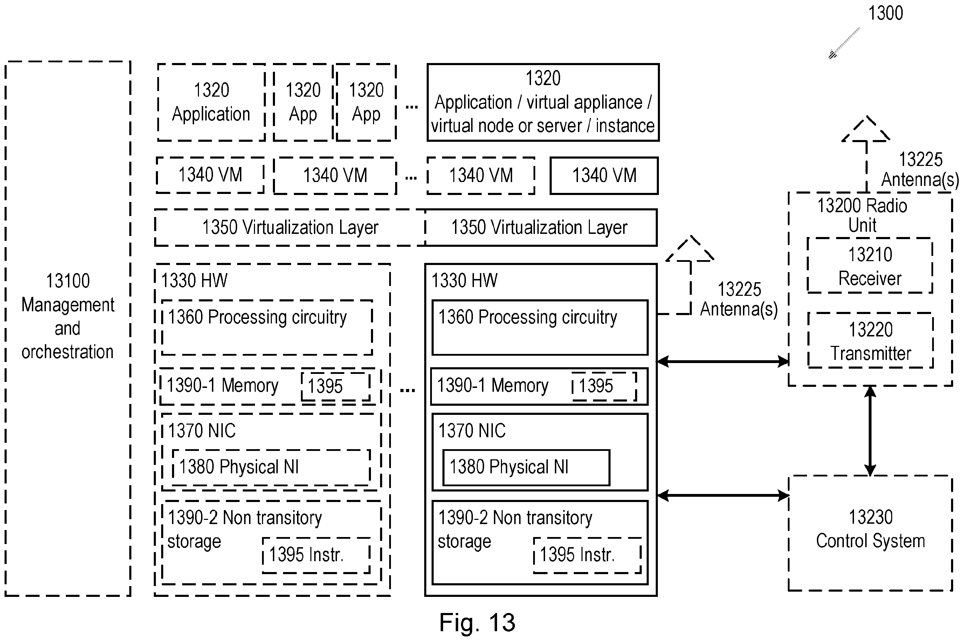

Figure 13 is a schematic block diagram illustrating a virtualization environment 1300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1300 hosted by one or more of hardware nodes 1330. Further, in embodiments in which the virtual node is not a radio access node or does not require radio connectivity (e.g., a core network node), then the network node may be entirely virtualized.

The functions may be implemented by one or more applications 1320 (which may alternatively be called software instances, virtual appliances, network functions, virtual nodes, virtual network functions, etc.) operative to implement some of the features, functions, and/or benefits of some of the embodiments disclosed herein. Applications 1320 are run in virtualization environment 1300 which provides hardware 1330 comprising processing circuitry 1360 and memory 1390. Memory 1390 contains instructions 1395 executable by processing circuitry 1360 whereby application 1320 is operative to provide one or more of the features, benefits, and/or functions disclosed herein.

Virtualization environment 1300, comprises general-purpose or special-purpose network hardware devices 1330 comprising a set of one or more processors or processing circuitry 1360, which may be commercial off-the-shelf (COTS) processors, dedicated Application Specific Integrated Circuits (ASICs), or any other type of processing circuitry including digital or analog hardware components or special purpose processors. Each hardware device may comprise memory 1390-1 which may be non-persistent memory for temporarily storing instructions 1395 or software executed by processing circuitry 1360. Each hardware device may comprise one or more network interface controllers (NICs) 1370, also known as network interface cards, which include physical network interface 1380. Each hardware device may also include non-transitory, persistent, machine-readable storage media 1390-2 having stored therein software 1395 and/or instructions executable by processing circuitry 1360. Software 1395 may include any type of software including software for instantiating one or more virtualization layers 1350 (also referred to as hypervisors), software to execute virtual machines 1340 as well as software allowing it to execute functions, features and/or benefits described in relation with some embodiments described herein.

Virtual machines 1340, comprise virtual processing, virtual memory, virtual networking or interface and virtual storage, and may be run by a corresponding virtualization layer 1350 or hypervisor. Different embodiments of the instance of virtual appliance 1320 may be implemented on one or more of virtual machines 1340, and the implementations may be made in different ways.

During operation, processing circuitry 1360 executes software 1395 to instantiate the hypervisor or virtualization layer 1350, which may sometimes be referred to as a virtual machine monitor (VMM). Virtualization layer 1350 may present a virtual operating platform that appears like networking hardware to virtual machine 1340.

As shown in Figure 13, hardware 1330 may be a standalone network node with generic or specific components. Hardware 1330 may comprise antenna 13225 and may implement some functions via virtualization. Alternatively, hardware 1330 may be part of a larger cluster of hardware (e.g. such as in a data center or customer premise equipment (CPE)) where many hardware nodes work together and are managed via management and orchestration (MANO) 13100, which, among others, oversees lifecycle management of applications 1320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1340 may be a software implementation of a physical machine that runs programs as if they were executing on a physical, non-virtualized machine. Each of virtual machines 1340, and that part of hardware 1330 that executes that virtual machine, be it hardware dedicated to that virtual machine and/or hardware shared by that virtual machine with others of the virtual machines 1340, forms a separate virtual network elements (VNE).

Still in the context of NFV, Virtual Network Function (VNF) is responsible for handling specific network functions that run in one or more virtual machines 1340 on top of hardware networking infrastructure 1330 and corresponds to application 1320 in Figure 13.

In some embodiments, one or more radio units 13200 that each include one or more transmitters 13220 and one or more receivers 13210 may be coupled to one or more antennas 13225. Radio units 13200 may communicate directly with hardware nodes 1330 via one or more appropriate network interfaces and may be used in combination with the virtual components to provide a virtual node with radio capabilities, such as a radio access node or a base station.

In some embodiments, some signalling can be effected with the use of control system 13230 which may alternatively be used for communication between the hardware nodes 1330 and radio units 13200.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- AMF: Access and Mobility Management Function
- MBS: Multicast Broadcast Services (When used as a prefix, MBS is sometimes used equivalently with MB)
- MB: Multicast Broadcast
- SMF: Session Management Function
- UPF: User Plane Function

- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- Pcell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- Scell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method performed by a first core network entity (800) comprising an access and mobility management function, AMF, the method comprising:
- receiving (702) a first user plane release request message (405) from a radio access network entity, the first user plane release request message comprising a request for a downlink tunnel associated with unicast of user plane data for one or more wireless devices (1200) in a multicast or broadcast session to be released; and
- sending (704) a second user plane release request message (406) to a third core network entity comprising a multicast broadcast session management function, MB-SMF, the second user plane release request message comprising a request for the downlink tunnel associated with unicast of user plane data for one or more wireless devices in a multicast or broadcast session to be released;
- receiving (706) a first user plane release response message (409) from the third core network entity;
- after receiving said first user plane release response message (409) from the third core network entity, sending (708) a second user plane release response message (410) to the radio access network entity.

2. The method of claim 1, wherein one or more of the first and second user plane release request messages comprises an identity of the multicast or broadcast session.

3. The method of any one of claims 1 to 2, wherein one or more of the first and second user plane release request messages comprises an identity of the downlink tunnel.

4. A method performed by a core network entity (800) comprising a multicast broadcast session management function, MB-SMF, the method comprising:
- receiving (702) a first user plane release request message (406) from a core network entity comprising an access and mobility management function, AMF, the first user plane release request message (406) comprising a request for a downlink tunnel associated with unicast of user plane data for one or more wireless devices (1200) in a multicast or broadcast session to be released; and
- sending (704) a second user plane release request message (407) to a core network entity comprising a multicast broadcast user plane function, MB-UPF, the second user plane release request message (407) comprising a request for the downlink tunnel associated with unicast of user plane data for one or more wireless devices in a multicast or broadcast session to be released;
- receiving (706) a first user plane release response message (408) from the core network entity comprising MB-UPF;
- after receiving said first user plane release response message (408) from the core network entity comprising MB-UPF, sending (708) a second user plane release response message (409) to the core network entity comprising an access and mobility management function, AMF.

5. The method of claim 4, wherein the user plane release request message comprises an identity of the multicast or broadcast session.

6. The method of any one of claims 4 to 5, wherein the user plane release request message comprises an identity of the downlink tunnel.

7. The method of any of claims 4-6, wherein the user plane release response message comprises an indication that the downlink tunnel has been released.

8. The method of any one of claims 4 to 7, wherein the user plane release response message comprises an identity of the multicast or broadcast session.

9. The method of any one of claims 4 to 8, wherein the user plane release response message comprises an identity of the downlink tunnel.

10. A core network entity (800) comprising an access and mobility management function, AMF, the core network entity comprising:
- processing circuitry configured to cause the core network entity to perform:
receiving (702) a first user plane release request message (405) from a radio access network entity, the first user plane release request message comprising a request for a downlink tunnel associated with unicast of user plane data for one or more wireless devices (1200) in a multicast or broadcast session to be released; and
sending (704) a second user plane release request message (406) to a third core network entity comprising a multicast broadcast session management function, MB-SMF, the second user plane release request message comprising a request for the downlink tunnel associated with unicast of user plane data for one or more wireless devices in a multicast or broadcast session to be released;
receiving (706) a first user plane release response message (409) from the third core network entity;
after receiving said first user plane release response message (409) from the third core network entity, sending (708) a second user plane release response message (410) to the radio access network entity;and
- power supply circuitry configured to supply power to the core network entity.

11. The core network entity of claim 10, wherein the processing circuitry is further configured to cause the base station to perform the method according to any one of claims 2 to 3.

12. A core network entity (800), the core network entity a multicast broadcast session management function, MB-SMF, the core network entity comprising:
- processing circuitry configured to cause the core network entity to perform:
receiving (702) a first user plane release request message (406) from a core network entity comprising an access and mobility management function, AMF, the first user plane release request message comprising a request for a downlink tunnel associated with unicast of user plane data for one or more wireless devices (1200) in a multicast or broadcast session to be released; and
sending (704) a second user plane release request message (407) to a core network entity comprising a multicast broadcast user plane function, MB-UPF, the second user plane release request message comprising a request for the downlink tunnel associated with unicast of user plane data for one or more wireless devices in a multicast or broadcast session to be released;
receiving (706) a first user plane release response message (408) from the core network entity comprising MB-UPF:
after receiving said first user plane release response message (408) from the core network entity comprising MB-UPF, sending (708) a second user plane release response message (409) to the core network entity comprising an access and mobility management function, AMF; and
- power supply circuitry configured to supply power to the core network entity.

13. The core network entity of claim 12, wherein the processing circuitry is further configured to cause the core network entity to perform the method according to any one of claims 5 to 9.

## Patentansprüche

1. Verfahren, durchgeführt von einer ersten Kernnetzinstanz (800), umfassend eine Zugangs- und Mobilitätsverwaltungsfunktion, AMF, wobei das Verfahren Folgendes umfasst:
- Empfangen (702) einer ersten Benutzerebenen-Freigabeanforderungsnachricht (405) von einer Funkzugangsnetzinstanz, wobei die erste Benutzerebenen-Freigabeanforderungsnachricht eine Anforderung für einen Downlink-Tunnel umfasst, der mit Unicast von Benutzerebenendaten für ein oder mehrere drahtlose Geräte (1200) in einer Multicast- oder Broadcast-Sitzung verbunden ist, die frei zugegeben ist; und
- Senden (704) einer zweiten Benutzerebenen-Freigabeanforderungsnachricht (406) an eine dritte Kernnetzinstanz, umfassend eine Multicast-Broadcast-Sitzungsverwaltungsfunktion, MB-SMF, wobei die zweite Benutzerebenen-Freigabeanforderungsnachricht eine Anforderung für den Downlink-Tunnel umfasst, der mit Unicast von Benutzerebenendaten für ein oder mehrere drahtlose Geräte in einer Multicast- oder Broadcast-Sitzung verbunden ist, die frei zugegeben ist;
- Empfangen (706) einer ersten Benutzerebenen-Freigabeantwortnachricht (409) von der dritten Kernnetzinstanz;
- nach dem Empfangen der ersten Benutzerebenen-Freigabeantwortnachricht (409) von der dritten Kernnetzinstanz, Senden (708) einer zweiten Benutzerebenen-Freigabeantwortnachricht (410) an die Funkzugangsnetzinstanz.

2. Verfahren nach Anspruch 1, wobei eine oder mehrere der ersten und der zweiten Benutzerebenen-Freigabeanforderungsnachricht eine Identität der Multicast- oder Broadcast-Sitzung umfassen.

3. Verfahren nach einem der Ansprüche 1 bis 2, wobei eine oder mehrere der ersten und der zweiten Benutzerebenen-Freigabeanforderungsnachricht eine Identität des Downlink-Tunnels umfassen.

4. Verfahren, durchgeführt von einer Kernnetzinstanz (800), umfassend eine Multicast-Broadcast-Sitzungsverwaltungsfunktion, MB-SMF, wobei das Verfahren Folgendes umfasst:
- Empfangen (702) einer ersten Benutzerebenen-Freigabeanforderungsnachricht (406) von einer Kernnetzinstanz, umfassend eine Zugangs- und Mobilitätsverwaltungsfunktion, AMF, wobei die erste Benutzerebenen-Freigabeanforderungsnachricht (406) eine Anforderung für einen Downlink-Tunnel umfasst, der mit Unicast von Benutzerebenendaten für ein oder mehrere drahtlose Geräte (1200) in einer Multicast- oder Broadcast-Sitzung verbunden ist, die frei zugegeben ist; und
- Senden (704) einer zweiten Benutzerebenen-Freigabeanforderungsnachricht (407) an eine Kernnetzinstanz, umfassend eine Multicast-Broadcast-Benutzerebenenfunktion, MB-UPF, wobei die zweite Benutzerebenen-Freigabeanforderungsnachricht (407) eine Anforderung für den Downlink-Tunnel umfasst, der mit Unicast von Benutzerebenendaten für ein oder mehrere drahtlose Geräte in einer Multicast- oder Broadcast-Sitzung verbunden ist, die frei zugegeben ist;
- Empfangen (706) einer ersten Benutzerebenen-Freigabeantwortnachricht (408) von der Kernnetzinstanz, umfassend die MB-UPF;
- nach dem Empfangen der ersten Benutzerebenen-Freigabeantwortnachricht (408) von der Kernnetzinstanz, umfassend die MB-UPF, Senden (708) einer zweiten Benutzerebenen-Freigabeantwortnachricht (409) an die Kernnetzinstanz, umfassend eine Zugangs- und Mobilitätsverwaltungsfunktion, AMF.

5. Verfahren nach Anspruch 4, wobei die Benutzerebenen-Freigabeanforderungsnachricht eine Identität der Multicast- oder Broadcast-Sitzung umfasst.

6. Verfahren nach einem der Ansprüche 4 bis 5, wobei die Benutzerebenen-Freigabeanforderungsnachricht eine Identität des Downlink-Tunnels umfasst.

7. Verfahren nach einem der Ansprüche 4 bis 6, wobei die Benutzerebenen-Freigabeantwortnachricht eine Anzeige umfasst, dass der Downlink-Tunnel freigegeben wurde.

8. Verfahren nach einem der Ansprüche 4 bis 7, wobei die Benutzerebenen-Freigabeantwortnachricht eine Identität der Multicast- oder Broadcastsitzung umfasst.

9. Verfahren nach einem der Ansprüche 4 bis 8, wobei die Benutzerebenen-Freigabeantwortnachricht eine Identität des Downlink-Tunnels umfasst.

10. Kernnetzinstanz (800), umfassend eine Zugangs- und Mobilitätsverwaltungsfunktion, AMF, wobei die Kernnetzinstanz Folgendes umfasst:
- eine Verarbeitungsschaltung, die dazu konfiguriert ist, die Kernnetzinstanz dazu zu veranlassen, Folgendes durchzuführen:
Empfangen (702) einer ersten Benutzerebenen-Freigabeanforderungsnachricht (405) von einer Funkzugangsnetzinstanz, wobei die erste Benutzerebenen-Freigabeanforderungsnachricht eine Anforderung für einen Downlink-Tunnel umfasst, der mit Unicast von Benutzerebenendaten für ein oder mehrere drahtlose Geräte (1200) in einer Multicast- oder Broadcast-Sitzung verbunden ist, die frei zugegeben ist; und
Senden (704) einer zweiten Benutzerebenen-Freigabeanforderungsnachricht (406) an eine dritte Kernnetzinstanz, umfassend eine Multicast-Broadcast-Sitzungsverwaltungsfunktion, MB-SMF, wobei die zweite Benutzerebenen-Freigabeanforderungsnachricht eine Anforderung für den Downlink-Tunnel umfasst, der mit Unicast von Benutzerebenendaten für ein oder mehrere drahtlose Geräte in einer Multicast- oder Broadcast-Sitzung verbunden ist, die frei zugegeben ist;
Empfangen (706) einer ersten Benutzerebenen-Freigabeantwortnachricht (409) von der dritten Kernnetzinstanz;
nach dem Empfangen der ersten Benutzerebenen-Freigabeantwortnachricht (409) von der dritten Kernnetzinstanz, Senden (708) einer zweiten Benutzerebenen-Freigabeantwortnachricht (410) an die Funkzugangsnetzinstanz; und
- eine Stromversorgungsschaltung, die dazu konfiguriert ist, die Kernnetzinstanz mit Strom zu versorgen.

11. Kernnetzinstanz nach Anspruch 10, wobei die Verarbeitungsschaltung ferner dazu konfiguriert ist, die Basisstation dazu zu veranlassen, das Verfahren nach einem der Ansprüche 2 bis 3 durchzuführen.

12. Kernnetzinstanz (800), umfassend eine Multicast-Broadcast-Sitzungsverwaltungsfunktion, MB-SMF, wobei die Kernnetzinstanz Folgendes umfasst:
- eine Verarbeitungsschaltung, die dazu konfiguriert ist, die Kernnetzinstanz dazu zu veranlassen, Folgendes durchzuführen:
Empfangen (702) einer ersten Benutzerebenen-Freigabeanforderungsnachricht (406) von einer Kernnetzinstanz, umfassend eine Zugangs- und Mobilitätsverwaltungsfunktion, AMF, wobei die erste Benutzerebenen-Freigabeanforderungsnachricht eine Anforderung für einen Downlink-Tunnel umfasst, der mit Unicast von Benutzerebenendaten für ein oder mehrere drahtlose Geräte (1200) in einer Multicast- oder Broadcast-Sitzung verbunden ist, die frei zugegeben ist; und
Senden (704) einer zweiten Benutzerebenen-Freigabeanforderungsnachricht (407) an eine Kernnetzinstanz, umfassend eine Multicast-Broadcast-Benutzerebenenfunktion, MB-UPF, wobei die zweite Benutzerebenen-Freigabeanforderungsnachricht eine Anforderung für den Downlink-Tunnel umfasst, der mit Unicast von Benutzerebenendaten für ein oder mehrere drahtlose Geräte in einer Multicast- oder Broadcast-Sitzung verbunden ist, die frei zugegeben ist;
Empfangen (706) einer ersten Benutzerebenen-Freigabeantwortnachricht (408) von der Kernnetzinstanz, umfassend die MB-UPF;
nach dem Empfangen der ersten Benutzerebenen-Freigabeantwortnachricht (408) von der Kernnetzinstanz, umfassend die MB-UPF, Senden (708) einer zweiten Benutzerebenen-Freigabeantwortnachricht (409) an die Kernnetzinstanz, umfassend eine Zugangs- und Mobilitätsverwaltungsfunktion, AMF; und
- eine Stromversorgungsschaltung, die dazu konfiguriert ist, die Kernnetzinstanz mit Strom zu versorgen.

13. Kernnetzinstanz nach Anspruch 12, wobei die Verarbeitungsschaltung ferner dazu konfiguriert ist, die Kernnetzinstanz dazu zu veranlassen, das Verfahren nach einem der Ansprüche 5 bis 9 durchzuführen.

## Revendications

1. Procédé exécuté par une première entité de réseau central (800) comprenant une fonction de gestion d'accès et de mobilité, AMF, le procédé comprenant :
- la réception (702) d'un premier message de demande de libération de plan utilisateur (405) en provenance d'une entité de réseau d'accès radio, le premier message de demande de libération de plan utilisateur comprenant une demande de tunnel de liaison descendante associée à une monodiffusion de données de plan utilisateur pour un ou plusieurs dispositifs sans fil (1200) dans une session de multidiffusion ou de diffusion à libérer ; et
- l'envoi (704) d'un second message de demande de libération du plan utilisateur (406) à une troisième entité de réseau central comprenant une fonction de gestion de session de diffusion multidiffusion, MB-SMF, le second message de demande de libération du plan utilisateur comprenant une demande pour le tunnel de liaison descendante associé à la monodiffusion des données du plan utilisateur pour un ou plusieurs dispositifs sans fil dans une session de multidiffusion ou de diffusion à libérer ;
- la réception (706) d'un premier message de réponse de libération de plan utilisateur (409) en provenance de la troisième entité de réseau central ;
- après la réception dudit premier message de réponse de libération de plan utilisateur (409) en provenance de la troisième entité de réseau central, l'envoi (708) d'un second message de réponse de libération de plan utilisateur (410) à l'entité de réseau d'accès radio.

2. Procédé selon la revendication 1, dans lequel un ou plusieurs des premier et second messages de demande de libération du plan utilisateur comprennent une identité de la session de multidiffusion ou de diffusion.

3. Procédé selon l'une quelconque des revendications 1 à 2, dans lequel un ou plusieurs des premier et second messages de demande de libération du plan utilisateur comprennent une identité du tunnel de liaison descendante.

4. Procédé exécuté par une entité de réseau central (800) comprenant une fonction de gestion de session de diffusion multidiffusion, MB-SMF, le procédé comprenant :
- la réception (702) d'un premier message de demande de libération de plan utilisateur (406) en provenance d'une entité de réseau central comprenant une fonction de gestion d'accès et de mobilité, AMF, le premier message de demande de libération de plan utilisateur (406) comprenant une demande de tunnel de liaison descendante associée à une monodiffusion de données de plan utilisateur pour un ou plusieurs dispositifs sans fil (1200) dans une session de multidiffusion ou de diffusion à libérer ; et
- l'envoi (704) d'un second message de demande de libération de plan utilisateur (407) à une entité de réseau central comprenant une fonction de plan utilisateur de diffusion multidiffusion, MB-UPF, le second message de demande de libération de plan utilisateur (407) comprenant une demande pour le tunnel de liaison descendante associé avec une monodiffusion de données de plan utilisateur pour un ou plusieurs dispositifs sans fil dans une session de multidiffusion ou de diffusion à libérer ;
- la réception (706) d'un premier message de réponse de libération de plan utilisateur (408) en provenance de l'entité de réseau central comprenant MB-UPF ;
- après réception dudit premier message de réponse de libération de plan utilisateur (408) en provenance de l'entité de réseau central comprenant MB-UPF, l'envoi (708) d'un second message de réponse de libération de plan utilisateur (409) à l'entité de réseau central comprenant une fonction de gestion d'accès et de mobilité, AMF.

5. Procédé selon la revendication 4, dans lequel le message de demande de libération du plan utilisateur comprend une identité de la session de multidiffusion ou de diffusion.

6. Procédé selon l'une quelconque des revendications 4 à 5, dans lequel le message de demande de libération du plan utilisateur comprend une identité du tunnel de liaison descendante.

7. Procédé selon l'une quelconque des revendications 4 à 6, dans lequel le message de réponse de libération du plan utilisateur comprend une indication selon laquelle le tunnel de liaison descendante a été libéré.

8. Procédé selon l'une quelconque des revendications 4 à 7, dans lequel le message de réponse de libération du plan utilisateur comprend une identité de la session de multidiffusion ou de diffusion.

9. Procédé selon l'une quelconque des revendications 4 à 8, dans lequel le message de réponse de libération du plan utilisateur comprend une identité du tunnel de liaison descendante.

10. Entité de réseau central (800) comprenant une fonction de gestion d'accès et de mobilité, AMF, l'entité de réseau central comprenant :
- des circuits de traitement configurés pour amener l'entité de réseau central à exécuter :
la réception (702) d'un premier message de demande de libération de plan utilisateur (405) en provenance d'une entité de réseau d'accès radio, le premier message de demande de libération de plan utilisateur comprenant une demande de tunnel de liaison descendante associée à une monodiffusion de données de plan utilisateur pour un ou plusieurs dispositifs sans fil (1200) dans une session de multidiffusion ou de diffusion à libérer ; et
l'envoi (704) d'un second message de demande de libération du plan utilisateur (406) à une troisième entité de réseau central comprenant une fonction de gestion de session de diffusion multidiffusion, MB-SMF, le second message de demande de libération du plan utilisateur comprenant une demande pour le tunnel de liaison descendante associé à une monodiffusion de données de plan utilisateur pour un ou plusieurs dispositifs sans fil dans une session de multidiffusion ou de diffusion à libérer ;
la réception (706) d'un premier message de réponse de libération de plan utilisateur (409) en provenance de la troisième entité de réseau central ;
après la réception dudit premier message de réponse de libération de plan utilisateur (409) en provenance de la troisième entité de réseau central, l'envoi (708) d'un second message de réponse de libération de plan utilisateur (410) à l'entité de réseau d'accès radio ; et
- un circuit d'alimentation électrique configuré pour fournir de l'énergie à l'entité de réseau central.

11. Entité de réseau central selon la revendication 10, dans laquelle les circuits de traitement sont en outre configurés pour amener la station de base à exécuter le procédé selon l'une quelconque des revendications 2 à 3.

12. Entité de réseau central (800), l'entité de réseau central étant une fonction de gestion de session de diffusion multidiffusion, MB-SMF, l'entité de réseau central comprenant :
- des circuits de traitement configurés pour amener l'entité de réseau central à exécuter :
la réception (702) d'un premier message de demande de libération du plan utilisateur (406) en provenance d'une entité de réseau central comprenant une fonction de gestion d'accès et de mobilité, AMF, le premier message de demande de libération du plan utilisateur comprenant une demande d'un tunnel de liaison descendante associée à une monodiffusion de données du plan utilisateur pour qu'un ou plusieurs dispositifs sans fil (1200) dans une session de multidiffusion ou de diffusion à libérer ; et
l'envoi (704) d'un second message de demande de libération du plan utilisateur (407) à une entité de réseau central comprenant une fonction de plan utilisateur de diffusion multidiffusion, MB-UPF, le second message de demande de libération du plan utilisateur comprenant une demande pour le tunnel de liaison descendante associé à la monodiffusion de données de plan utilisateur pour un ou plusieurs dispositifs sans fil dans une session de multidiffusion ou de diffusion à libérer ;
la réception (706) d'un premier message de réponse de libération de plan utilisateur (408) en provenance de l'entité de réseau central comprenant MB-UPF :
après la réception dudit premier message de réponse de libération de plan utilisateur (408) en provenance de l'entité de réseau central comprenant MB-UPF, l'envoi (708) d'un second message de réponse de libération de plan utilisateur (409) à l'entité de réseau central comprenant une fonction de gestion d'accès et de mobilité, AMF ; et
- un circuit d'alimentation électrique configuré pour fournir de l'énergie à l'entité de réseau central.

13. Entité de réseau central selon la revendication 12, dans laquelle les circuits de traitement sont en outre configurés pour amener l'entité de réseau central à exécuter le procédé selon l'une quelconque des revendications 5 à 9.
